# EUROPEAN PATENT SPECIFICATION

(11) **EP 2 211 320 B1**
(45) Date of publication and mention of the grant of the patent: **18.04.2012**
(21) Application number: 09151353.1
(22) Date of filing: 26.01.2009
(51) Int. Cl.: G08B 25/10, H04B 1/38, H04B 1/713

(54) **A method and a device for wireless communication**
Verfahren und Vorrichtung für die drahtlose Kommunikation
Procédé et dispositif pour communications sans fil

(43) Date of publication of application: 28.07.2010
(73) Proprietor: STT Condigi AB, 212 37 Malmö (SE)
(72) Inventor: Erlandsson, Bengt, 267 36, Bjuv (SE)
(74) Representative: Persson, Albin

(56) References cited:
- WO-A-00/21053
- WO-A-2004/013824
- US-A- 4 234 874
- US-A1- 2008 001 731

## Description

### TECHNICAL FIELD

The invention relates to a method and a device for wireless communication between a first unit and at least one second unit. The first unit can be a care phone or similar device that automatically connects to an alarm central when an alarm is initiated. The second unit can be a care phone pendent or similar mobile unit or another alarm unit or smoke detector.

Where the second unit is a care phone pendent that is worn or carried by a person it is normally provided with an alarm button. A single push on the button will cause an alarm signal to be transmitted to the first unit. When receiving the alarm signal the first unit will connect to the alarm central and forward the alarm signal.

The first unit and the second unit both comprise a transmitter and a receiver operating at the same frequency. Since the second unit is mobile it normally battery powered.

### PRIOR ART

Most prior art devices comprises a care phone that is connected to a conventional public switched telephone network (PSTN). At least one mobile unit is carried by a user, such as an elderly or disabled person. The mobile unit is provided with a push button and a radio unit for bidirectional communication, so as to enable both sending and receiving of signals. The mobile unit and the care phone normally operate on the EU frequency 869 MHz for social alarms.

The care phone normally can be programmed to dial at least one phone number and to send an alarm message to an alarm central. After establishing a connection with the alarm central the care phone also can be used for an ordinary telephone conversation either with a handset or as a speakerphone.

In many countries the communication between the care phone and mobile unit is carried out at a predetermined narrow frequency band, such as 869.2 MHz. At such frequencies characteristics of each room or premises will cause different conditions for the radio communication. Specific distances between walls and furniture and the physical location of the furniture may result in standing waves that in turn will decrease the signal level. There might even be nodes where the signal level is close to zero.

In an emergency situation a person located in or close to a node may not be able to establish a radio connection between the mobile unit and the care phone. As a result no alarm will be forwarded to the alarm central and the person will not be able to acquire help. It would be possible to improve the situation by increasing the power of the transmitter of the mobile unit. However, higher power levels would shorten the life of the battery of the mobile unit. There are also limits based on official standards and regulations.

A known method of improving the quality of radio communication signals in environments where there are sources of disturbances is based on frequency-hopping. Frequency-hopping spread spectrum (FHSS) is a method of transmitting radio signals by rapidly switching a carrier among many frequency channels, using a pseudorandom sequence known to both transmitter and receiver. Spread-spectrum signals are highly resistant to narrowband interference. One of the challenges of frequency-hopping systems is to synchronize the transmitter and receiver.

Adaptive Frequency-hopping spread spectrum (AFH) (as used in Bluetooth) improves resistance to radio frequency interference by avoiding using crowded frequencies in the hopping sequence. The key idea behind AFH is to hop only over the "good" frequencies, by avoiding the frequency channels that are experiencing radio frequency interference from a certain transmitter. Therefore, AFH need to be complemented by a mechanism for detecting good/bad channels.

The frequency-hopping techniques all suffer from the requirements of complicated control systems and processors. In many applications the problem of synchronization is considered larger than the advantages that can be achieved. A drawback is that the power consumption is comparatively high leading to short life time of the batteries.
US2008/0001731 relates to an alarm system that is capable of receiving signals transmitted from wireless intrusion detectors at more than one frequency and automatically switching from receiving at one frequency to receiving at a different frequency based on the detection of an interference signal.
WO00/21053 discloses a wireless alarm system comprising a base station and a plurality of sensors. Each sensor checks that messages sent are acknowledged by base station.

### SUMMARY OF THE INVENTION

The invention is as set out in independent claim 1, preferred embodiments being set out in dependent claims 2 to 7.

It is an object of the present invention to overcome the problem and drawback discussed above. A further object is to provide a method and a device that will ensure a very high level of safety of communication without significant demands on complexity and battery power.

These objects are achieved by a method according to which a primary frequency is used by a first unit and a mobile second unit during normal conditions. During conditions when an acceptable communication cannot be established at the primary frequency a secondary frequency is used instead.

In one practical embodiment the second unit transmits an alarm signal when activated by the user. The primary frequency is used. After transmission of the alarm signal the second unit awaits an acknowledge signal also at the primary frequency. Normally, at least one further attempt is made by the second unit at the primary frequency if no acknowledge signal is received from the first unit.

The first unit normally is connected to mains and normally is in a first receiving mode so as to be able to respond to an alarm signal from the second unit at any time. Repeatedly the first unit enters a second receiving mode wherein a secondary frequency is used. Preferably, the first unit will be in the first receiving mode for a longer time period than in the second receiving mode.

### BRIEF DESCRIPTION OF THE DRAWINGS

In order that the manner in which the above recited and other advantages and objects of the invention are obtained will be readily understood, a more particular description of the invention briefly described above will be rendered by reference to specific embodiments thereof which are illustrated in the appended drawings.

Understanding that these drawings depict only typical embodiments of the invention and are not therefore to be considered to be limiting of its scope, the invention will be described and explained with additional specificity and detail through the use of the accompanying drawings in which:
- Fig. 1: shows schematically elements of a basic installation of device in accor- dance with the invention,
- Fig. 2: is a basic diagrammatic view showing functional elements of a first unit in accordance with the invention and
- Fig. 3: is a basic diagrammatic view showing functional elements of a second unit in accordance with the invention

### DETAILED DESCRIPTION

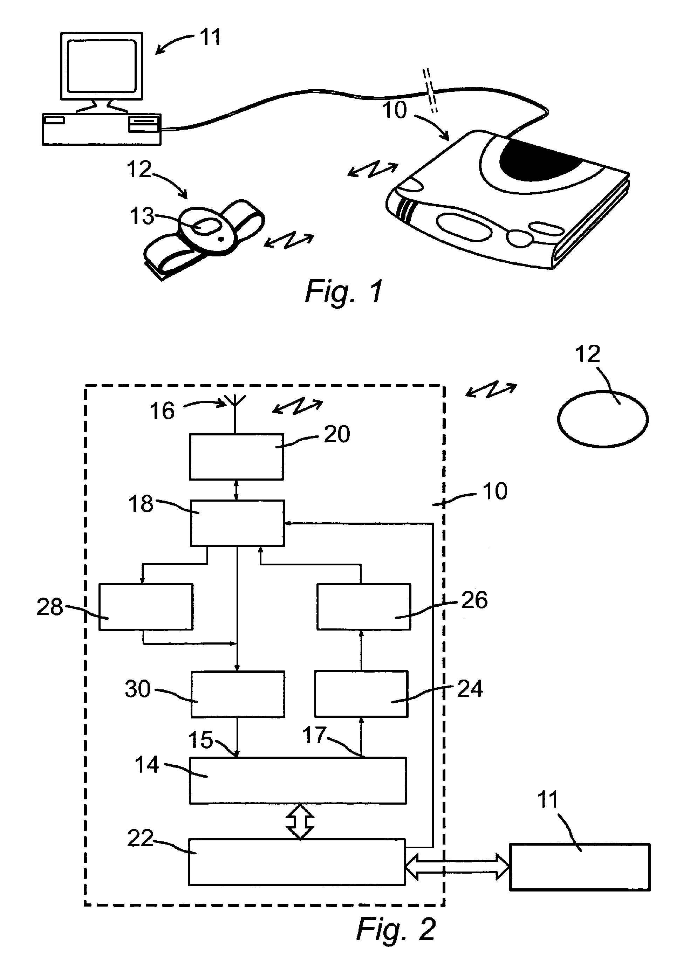

The basic installation shown in Fig. 1 includes a first unit 10 operating as a base unit. In the embodiment shown it is connected to a central unit 11 by wire, such as a public switched telephone network. In other embodiments the connection between the first unit and the central unit is provided by wireless means such as Global System for Mobile communications (GSM) or similar digital cellular technology used for transmitting mobile voice and data services. A further possibility is to provide the connection over internet, for instance by Voice Over Internet Protocol (VOIP). The central unit 11 will carry out alarm functions including calls for medical or service personnel, police and fire brigade as a response to an alarm request from the first unit 10.

The installation also comprises a second mobile unit 12 that can be carried as a pendant or a wristwatch. In the shown embodiment the mobile unit comprises only one button 13 which when being pressed will send an alarm message to the first unit.

The embodiment shown in Fig. 2 depicts a radio communication system comprising a radio chip 14, an antenna 16 and accompanying circuits. The radio chip has an input terminal 15 and an output terminal 17. The antenna 16 is connected to a switch, preferably three way switch 18, via a conventional first matching circuit 20. The switch 18 has one input output terminal connecting the switch to the first matching circuit and one control input terminal which is connected to a micro controller 22. The three way switch 18 further includes one input terminal for receiving radio signals and first and second output terminals for outputting radio signals. A radio communication system is included in the first unit as well as in the second mobile unit. In some embodiments some or all functions of the micro controller 22 are integrated in the radio chip 14.

The micro controller 22 is arranged to set the radio chip 14 into a sending mode in which a radio signal is transmitted through a second matching circuit 24, a first filter 26 and the three way switch 18. While in this mode the micro controller 22 through a connection to the three way switch 18 allows the radio signal to pass the switch 18 to the antenna 16.

The micro controller 22 also is designed to set the radio chip 14 into a first receiving mode and into a second receiving mode. In the first receiving mode a radio signal is transferred from the antenna 16 to the radio chip 14 through an output terminal of the three way switch 18, a second filter 28 and a third matching circuit 30. In one embodiment the second filter 28 is a surface acoustic wave filter (SAW). In the second receiving mode a radio signal is transferred from the antenna 16 to the radio chip through the third matching circuit 30.

The micro controller 22 is operatively connected to the three way switch 18 so as to control it into one of three modes. In the sending mode the three way switch 18 allows passage of a radio signal received at an input terminal from the radio chip 14 to the antenna 16. In the first receiving mode the three way switch 18 allows passage of a radio signal from the antenna 16 to the radio chip 14 through a first switch output terminal of the three way switch, the second filter 28 and the third matching circuit 30. The third mode corresponds to the second receiving mode where the three way switch 18 allows passage of a radio signal from the antenna 16 to the radio chip 14 through a second switch output terminal of the three way switch and the third matching circuit. The radio signal in the third mode is not fed through the second filter 28.

In operation the radio communication system of the first unit continuously is in a first receiving mode during a first period of time. In the first receiving mode the radio chip 14 of the first unit is tuned to receive radio signals at a first predetermined frequency. After a first set time period the radio chip 14 of the first unit is tuned to receive radio signals at a second predetermined frequency. The radio chip will remain at the second predetermined frequency during a second set time period and then again be set to operate at the first predetermined frequency.

In the shown embodiment the radio chip is tuned by control signals from the micro controller 22. In one embodiment the radio chip is an integrated circuit commercially available from TEXAS INSTRUMENTS under the name CC 1020. Normally, the second set time period is shorter than the first set time period. Preferably, the second set time period is no more than half of the first set time period. In a specific embodiment the second set time period is no more than a third of the first set time period.

The first unit 10 is operatively connected to a central unit 11. The connection can be by wire, for instance through a PSTN. It is also possible to arrange a wireless connection between the first unit 10 and the second unit 11, such as through a GSM or other wireless telephone system or any other long distance radio communication.

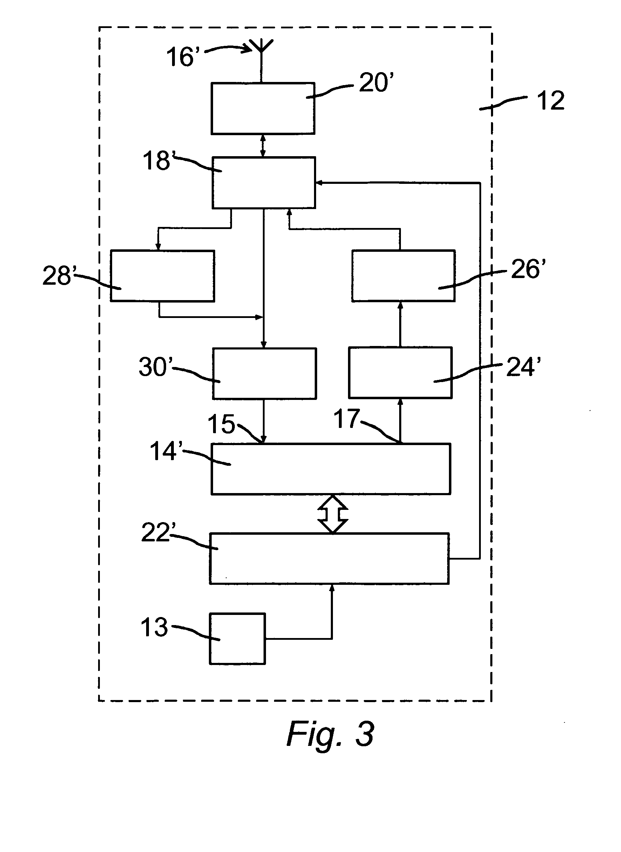

The second mobile unit 12 as illustrated in Fig. 3 normally is in a "sleeping mode" and no radio communication is taking place. Since most of the elements of the second unit 12 are identical to the elements included in the first unit 10 all elements relating to the second unit are referred to with the same reference numeral with the addition of an apostrophe. This sleeping mode is not changed until the user carrying the mobile unit 12 presses the button 13 or another activation of the unit takes place in an alarm situation.

In the alarm situation the micro controller 22' receives an activation signal from a physical activating device such as a push button 13. The micro controller 22' forces the radio chip 14' to transmit an alarm signal, normally preceded by a preamble signal. The micro controller 22' also sets the three way switch into the sending mode. The radio transmission will occur at the first predetermined frequency. The preamble signal will ensure that the radio chip 14 of the first unit is enabled and prepared to receive further radio signals.

During normal conditions the radio chip 22 of the first unit receives the preamble signal and the alarm signal as described above. When a complete alarm signal is received and accepted by the micro controller 22 an acknowledge signal is generated by the micro controller 22 and sent by the radio chip through the first filter 26 after setting the three way switch in the sending mode. After receiving the acknowledge signal the second unit resumes the sleeping mode.

If the second unit does not receive an acknowledge signal at least one, preferably at least two, further alarm signals are transmitted as set out above. The micro controller 22' of the second unit is designed to transmit a predetermined number of alarm signals and if no acknowledge signal is received from the first unit within a predetermined time period the micro controller 22' instructs the radio chip 14' of the second unit to switch operating frequency. In this connection the micro controller 22' also sets the three way switch in the sending mode. The same sequence as described above is then repeated and alarm signals are transmitted as radio signals at a second predetermined frequency.

Since the actual time for the change of frequency used for the alarm signal cannot be determined advance the first unit has to be prepared to receive the alarm signal at either frequency. In accordance with the invention his problem is solved by alternating the operating frequency of the radio chip 14 of the first unit between the first predetermined frequency and the second predetermined frequency. In a practical embodiment the micro controller 22 of the first unit instructs the radio chip 14 of the first unit to be operating at the first predetermined frequency during most of the time. In one embodiment the radio chip of the first unit will be operating at the first predetermined frequency at about 75% of the total time and at the second predetermined frequency at about 25% of the total time.

By using two alternating frequencies the probability of establishing an approved radio communication session between the second unit 12 and the first unit 10 is substantially improved. Standing waves can be formed in specific areas of the premises where the invention is used but most likely either the first predetermined frequency or the second predetermined frequency will provide the required result.

## Claims

1. A method of wireless communication between a first unit (10) and at least one second unit (12), ***characterised* by** the following steps:
said at least one second unit (12) responding to an activation by transmitting an alarm signal at a first predetermined frequency,
said first unit (10) being in a first receiving mode during a first time period to continuously receive signals from said at least one second unit at said first predetermined frequency and responding to reception of the alarm signal by transmitting an acknowledge signal at said first predetermined frequency,
said at least one second (12) unit changing to a second predetermined frequency and transmitting an alarm signal at said second predetermined frequency if no acknowledge signal is received from said first unit,
said first unit (10) repeatedly changing to a second receiving mode to continuously receive signals from said at least one second unit (12) at said second predetermined frequency and responding to reception of the alarm signal by transmitting an acknowledge signal at said second predetermined frequency, and
said first unit (10) remaining in said second receiving mode during a second time period before switching over to said first receiving mode.

2. A method in accordance with claim 1, wherein said second time period is shorter than said first time period.

3. A method in accordance with claim 1, also including the step of said at least one second unit (12) repeating the transmission of the alarm signal at said first predetermined frequency a first predetermined number of times if no acknowledge signal is received from said first unit (10).

4. A method in accordance with claim 1, also including the step of said at least one second unit (12) repeating the transmission of the alarm signal at said second predetermined frequency a second predetermined number of times if no acknowledge signal is received from said first unit (10).

5. A method in accordance with claim 1, also including the step of sending a control signal from a micro controller (22') of the second unit (12) to a radio chip (14') of the second unit (12) to repeat the transmission of the alarm signal at least twice at said first predetermined frequency if no acknowledge signal is received from the first unit.

6. A method in accordance with claim 5, also including the step of sending a further control signal from the micro controller (22') of the second unit (12) to the radio chip (14') of the second unit (12) to change to the second predetermined frequency and to repeat the transmission of the alarm signal at least twice at said second predetermined frequency if no acknowledge signal is received from the first unit.

7. A method in accordance with claim 1, also including the step of sending control signals from a micro controller (22; 22') to a three way switch (18; 18'), so as to put the three way switch (18; 18') in a first sending mode allowing passage of a radio signal from a radio chip (14; 14') to an antenna (16; 16') through a first filter (26; 26'), or in a first receiving mode allowing passage of a radio signal from the antenna (16; 16') to the radio chip (14; 14') through a second filter (28; 28'), or in a second receiving mode allowing passage of a radio signal from the antenna (16; 16') to the radio chip (14; 14').

## Patentansprüche

1. Verfahren einer drahtlosen Kommunikation zwischen einer ersten Einheit (10) und wenigstens einer zweiten Einheit (12), **gekennzeichnet durch** die folgenden Schritte:
die wenigstens eine zweite Einheit (12) antwortet auf eine Aktivierung **durch** Senden eines Alarmsignals mit einer ersten vorbestimmten Frequenz,
die erste Einheit (10) befindet sich in einem ersten Empfangsmodus während einer ersten Zeitdauer, um Signale von der wenigstens einen zweiten Einheit mit der ersten vorbestimmten Frequenz kontinuierlich zu empfangen, und antwortet auf den Empfang des Alarmsignals **durch** Senden eines Bestätigungssignals mit der ersten vorbestimmten Frequenz,
die wenigstens eine zweite (12) Einheit wechselt zu einer zweiten vorbestimmten Frequenz und sendet ein Alarmsignal mit der zweiten vorbestimmten Frequenz, falls kein Bestätigungssignal von der ersten Einheit erhalten wird,
die erste Einheit (10) wechselt wiederholt zu einem zweiten Empfangsmodus, um Signale von der wenigstens einen zweiten Einheit (12) mit der zweiten vorbestimmten Frequenz kontinuierlich zu empfangen, und antwortet auf den Empfang des Alarmsignals **durch** Senden eines Bestätigungssignals mit der zweiten vorbestimmten Frequenz, und
die erste Einheit (10) bleibt während einer zweiten Zeitdauer vor dem Umschalten auf den ersten Empfangsmodus in dem zweiten Empfangsmodus.

2. Verfahren nach Anspruch 1, in welchem die zweite Zeitdauer kürzer als die erste Zeitdauer ist.

3. Verfahren nach Anspruch 1, auch mit dem Schritt, dass die wenigstens eine zweite Einheit (12) die Sendung des Alarmsignals mit der ersten vorbestimmten Frequenz eine erste vorbestimmte Anzahl von Malen wiederholt, falls kein Bestätigungssignal von der ersten Einheit (10) empfangen wird.

4. Verfahren nach Anspruch 1, auch mit dem Schritt, dass die wenigstens eine zweite Einheit (12) die Sendung des Alarmsignals mit der zweiten vorbestimmten Frequenz eine zweite vorbestimmte Anzahl von Malen wiederholt, falls kein Bestätigungssignal von der ersten Einheit (10) empfangen wird.

5. Verfahren nach Anspruch 1, auch mit dem Schritt des Sendens eines Steuersignals von einem Mikrokontroller (22') der zweiten Einheit (12) an einen Funkchip (14') der zweiten Einheit (12), um die Sendung des Alarmsignals wenigstens zweimal mit der ersten vorbestimmten Frequenz zu wiederholen, falls kein Bestätigungssignal von der ersten Einheit erhalten wird.

6. Verfahren nach Anspruch 5 auch mit dem Schritt des Sendens eines weiteren Steuersignals von dem Mikrokontroller (22') der zweiten Einheit (12) an den Funkchip (14') der zweiten Einheit (12), um zu der zweiten vorbestimmten Frequenz zu wechseln und um die Sendung des Alarmsignals wenigstens zweimal mit der zweiten vorbestimmten Frequenz zu wiederholen, falls kein Bestätigungssignal von der ersten Einheit empfangen wird.

7. Verfahren nach Anspruch 1, auch mit dem Schritt des Sendens von Steuersignalen von einem Mikrokontroller (22; 22') an einen Dreiwegeschalter (18; 18'), um so den Dreiwegeschalter (18; 18') zu versetzten in einen ersten Sendemodus, der den Durchgang eines Funksignals von einem Funkchip (14; 14') an eine Antenne (16; 16') über ein erstes Filter (26; 26') erlaubt, oder in einen ersten Empfangsmodus, der den Durchgang eines Funksignals von der Antenne (16; 16') an den Funkchip (14; 14') über ein zweites Filter (28; 28') erlaubt, oder in einen zweiten Empfangsmodus, der den Durchgang eines Funksignals von der Antenne (16; 16') an den Funkchip (14; 14') erlaubt.

## Revendications

1. Procédé de communication sans fil entre une première unité (10) et au moins une seconde unité (12) **caractérisé par** les étapes suivantes dans lesquelles :
ladite au moins une seconde unité (12) répond à une activation en transmettant un signal d'alarme à une première fréquence prédéterminée,
ladite première unité (10) est dans un premier mode de réception pendant une première période afin de recevoir en continu des signaux d'au moins une seconde unité à ladite première fréquence prédéterminée et répond à la réception du signal d'alarme en transmettant un signal d'accusé de réception à ladite première fréquence prédéterminée,
ladite au moins une seconde unité (12) adopte une seconde fréquence prédéterminée et transmet un signal d'alarme à ladite seconde fréquence prédéterminée si aucun signal d'accusé de réception n'est reçu de ladite première unité,
ladite première unité (10) adopte de façon répétée un second mode de réception afin de recevoir en continu des signaux de ladite au moins une seconde unité (12) à ladite seconde fréquence prédéterminée et répond à la réception du signal d'alarme en transmettant un signal d'accusé de réception à ladite seconde fréquence prédéterminée, et
ladite première unité (10) reste dans ledit second mode de réception pendant une seconde période avant de passer au premier mode de réception.

2. Procédé selon la revendication 1, dans lequel ladite seconde période est plus courte que ladite première période.

3. Procédé selon la revendication 1, comprenant également l'étape consistant pour ladite au moins une seconde unité (12) à répéter la transmission du signal d'alarme à ladite première fréquence prédéterminée un premier nombre de fois prédéterminé si aucun signal d'accusé de réception n'est reçu de ladite première unité (10).

4. Procédé selon la revendication 1, comprenant également l'étape consistant pour ladite au moins une seconde unité (12) à répéter la transmission du signal d'alarme à ladite seconde fréquence prédéterminée un second nombre de fois prédéterminé si aucun signal d'accusé de réception n'est reçu de ladite première unité (10).

5. Procédé selon la revendication 1, comprenant en outre l'étape consistant à envoyer un signal de commande depuis un microcontrôleur (22') de la seconde unité (12) à la puce radio (14') de la seconde unité (12) afin de répéter la transmission du signal d'alarme au moins deux fois à ladite première fréquence prédéterminée si aucun signal d'accusé de réception n'est reçu de la première unité.

6. Procédé selon la revendication 5, comprenant également l'étape consistant à envoyer un signal de commande supplémentaire depuis le microcontrôleur (22') de la seconde unité (12) à la puce radio (14') de la seconde unité (12) afin d'adopter la seconde fréquence prédéterminée et de répéter la transmission du signal d'alarme au moins deux fois à ladite seconde fréquence prédéterminée si aucun signal d'accusé de réception n'est reçu de la première unité.

7. Procédé selon la revendication 1, comprenant également l'étape consistant à envoyer des signaux de commande depuis un microcontrôleur (22 ; 22') à un commutateur à trois voies (18 ; 18') afin de mettre le commutateur à trois voies (18 ; 18') dans un premier mode d'envoi permettant le passage d'un signal radio depuis une puce radio (14, 14') vers une antenne (16 ; 16') via un premier filtre (26 ; 26'), ou dans un premier mode de réception permettant le passage d'un signal radio de l'antenne (16 ; 16') vers la puce radio (14 ; 14') via un second filtre (28 ; 28'), ou dans un second mode de réception permettant le passage d'un signal radio de l'antenne (16 ; 16') à la puce radio (14 ; 14').
